# EUROPÄISCHE PATENTANMELDUNG

(11) **EP 1 519 175 A1**
(43) Veröffentlichungstag der Anmeldung: **30.03.2005**
(21) Anmeldenummer: 04020922.3
(22) Anmeldetag: 02.09.2004
(51) Int. Cl.: G01L 23/10

(54) **Druckmessstecker**

(30) Priorität: 23.09.2003 DE 10344080
(71) Anmelder: Beru AG, 71636 Ludwigsburg (DE)
(72) Erfinder: Pechhold, Frank, 71642 Ludwigsburg (DE); Haussner, Michael, 71726 Benningen (DE); Wyrwich, Ulf, 74385 Pleidelsheim (DE); Houben, Hans, 52146 Würselen (DE)
(74) Vertreter: Pohlmann, Eckart, Dipl.-Phys.

(57) **Zusammenfassung**

Druckmessstecker zum Messen des Verbrennungsdrucks im Zylinder eines Dieselmotors für eine Stabglühkerze mit einem Kerzenkörper und einem darin angeordneten Heizstab, wobei der am Heizstab liegende Verbrennungsdruck vom Heizstab zur Anschlussseite übertragen wird. Der Druckmessstecker weist ein Gehäuse (2a), das auf den anschlussseitigen Teil des Körpers der Stabglühkerze aufsetzbar ist, elektrische Anschlüsse (2b) im Gehäuse (2a), die bei aufgesetztem Stecker den Glühkerzenanschluss (1a) des Heizstabes kontaktieren und zur Anschlussseite des Steckers führen, und einen Drucksensor (3a) auf, der im Gehäuse (2a) des Steckers so angeordnet ist, dass er bei aufgesetztem Stecker durch den vom Glühkerzenanschluss (1a) des Heizstabes übertragenen Druck beaufschlagt ist.

## Beschreibung

Die Erfindung betrifft einen Druckmessstecker zum Messen des Verbrennungsdruckes im Zylinder eines Dieselmotors für eine Stabglühkerze mit einem Kerzenkörper und einem darin so angeordneten Heizstab, dass der am Heizstab liegende Verbrennungsdruck vom Heizstab zur Anschlussseite übertragen wird.

Bei den bisher üblichen Stabglühkerzen, die als Kaltstarthilfe oder zur Unterstützung des Verbrennungsvorganges unter bestimmten Bedingungen des Dieselmotors dienen, war es bisher nicht möglich, eine Druckinformation aus dem Verbrennungsraum zu erfassen. Hierzu waren zusätzliche Bohrungen und Sensoren erforderlich.

Die der Erfindung zugrunde liegende Aufgabe besteht daher darin, einen Druckmessstecker der eingangs beschriebenen Art zu schaffen, der auf eine übliche Glühkerze aufgesetzt werden kann und mit dem Druck arbeitet, der vom Heizstab der Glühkerze übertragen wird.

Der erfindungsgemäße Druckmessstecker soll insbesondere auf eine Stabglühkerze aufsetzbar sein, die einen herkömmlichen üblichen Aufbau hat.

Diese Aufgabe wird gemäß der Erfindung durch die Ausbildung gelöst, die im Anspruch 1 angegeben ist.

Besonders bevorzugte Ausgestaltungen und Weiterbildungen des erfindungsgemäßen Druckmesssteckers sind Gegenstand der Ansprüche 2 und 3.

Im Folgenden wird anhand der zugehörigen Zeichnungen ein besonders bevorzugtes Ausführungsbeispiel des erfindungsgemäßen Druckmesssteckers näher beschrieben.

Es zeigen
Fig. 1 das Ausführungsbeispiel des erfindungsgemäßen Druckmesssteckers in einer Schnittansicht im auf eine Stabglühkerze aufgesetzten Zustand,
Fig. 2 in einer Seitenansicht den anschlussseitigen Teil einer Stabglühkerze und
Fig. 3 in einer Seitenansicht den Sensorkäfig des in Fig. 1 dargestellten Ausführungsbeispiels.

Eine Stabglühkerze umfasst üblicherweise einen Kerzenkörper, der im Zylinder eines Dieselmotors angeordnet wird, und einen im Kerzenkörper angeordneten Heizstab, der brennraumseitig über den Kerzenkörper vorsteht und anschlussseitig mit einem Glühkerzenanschluss zur elektrischen Versorgung versehen ist.

Der in den Verbrennungsraum des Zylinders ragende Teil des Heizstabes ist dem dort herrschenden Verbrennungsdruck ausgesetzt und dieser Druck wird über den Heizstab zur Anschlussseite der Stabglühkerze übertragen. Das kann beispielsweise dadurch erfolgen, dass der Heizstab gleitend verschiebbar im Kerzenkörper angeordnet ist.

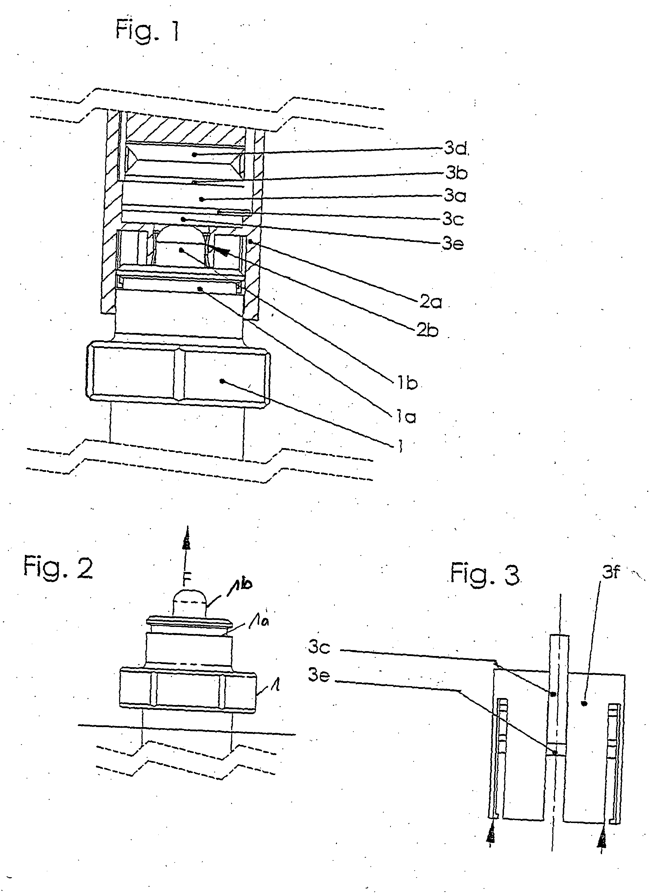

Wie es in Fig. 2 dargestellt ist, steht der Glühkerzenanschluss 1b anschlussseitig über eine Glühkerzensteckerverrastung 1a der Glühkerze 1 vor.

Fig. 1 zeigt in einer Schnittansicht ein Ausführungsbeispiel des erfindungsgemäßen Druckmesssteckers im auf den anschlussseitigen Teil der Stabglühkerze aufgesetzten und in die Glühkerzensteckerverrastung 1a eingerasteten Zustand.

Der Druckmessstecker umfasst ein Steckergehäuse 2a, in dem elektrische Anschlüsse 2b vorgesehen sind, die im aufgesetzten Zustand des Steckers den Glühkerzenanschluss 1b kontaktieren. Die elektrischen Anschlüsse 2b führen zur Anschlussseite des Steckers und können dort mit einer elektrischen Versorgungsquelle verbunden werden.

Ein Drucksensorelement 3a, beispielsweise ein piezoelektrisches Messelement, ist im Steckergehäuse 2a angeordnet und in Form einer Scheibe ausgebildet, an deren Stirnflächen Kontakte 3b und 3c vorgesehen sind. Das Drucksensorelement 3a ist mit seinen Kontakten 3b, 3c über ein Federelement 3d in einem Sensorkäfig 3f angeordnet. Eine isolierende Druckplatte 3e ist an der Unterseite, d. h. der dem Glühkerzenanschluss 1b zugewandten Seite angeordnet und sorgt für eine gleichmäßige Druckverteilung.

Dieser Aufbau ist im Einzelnen in Fig. 3 dargestellt, die eine Seitenansicht des Sensorkäfigs 2f zeigt.

Um den oben beschriebenen Aufbau vor Umwelteinflüssen zu schützen, ist er von dem Steckergehäuse 2a umschlossen, das aus einem Kunststoffmaterial gebildet sein kann.

Wie es im Einzelnen in Fig. 1 dargestellt ist, wird beim Aufstecken des Steckers die Federkraft des Federelementes 3d überwunden und wird die Aufsteckkraft über den Glühkerzenanschluss 1b in das Federelement 3d geleitet. Diese Federkraft dient als Vorspannung für das Drucksensorelement 3a.

Beim weiteren Aufsetzen des Steckers verrastet der Sensorkäfig 3f in der Steckerverrastung 1a der Stabglühkerze, wodurch die Vorspannung zwischen dem Glühkerzenanschluss 1b und dem Sensorkäfig 3f aufrechterhalten wird.

Die oben beschriebene Anordnung arbeitet in der folgenden Weise. Die Glühkerze 1 ist beispielsweise mit einem Gewinde fest im Motorblock verschraubt. Bei einer Druckänderung im Verbrennungsraum wird diese über den Glühkerzenanschluss 1b übertragen, der eine Relativbewegung gegenüber dem fest verschraubten Glühkerzenkörper ausführt. Hierdurch wird eine Kraft auf das Drucksensorelement 3a im Sensorkäfig 3f ausgeübt, die zu einer Änderung der Vorspannung zwischen dem Sensorkäfig 3f und dem Glühkerzenanschluss 1b führt. Diese Änderung im Ausgangssignal des Drucksensorelementes 3a wird als ein Maß für den Druck im Verbrennungsraum des Dieselmotors abgenommen und ausgewertet.

Die zu diesem Zweck vorgesehene elektronische Schaltung oder Schaltungsanordnung kann im Druckmessstecker integriert sein oder ist in einem davon getrennten Gerät untergebracht.

Der oben beschriebene Stecker kann auf eine bereits montierte Stabglühkerze aufgesteckt werden.

## Patentansprüche

1. Druckmessstecker zum Messen des Verbrennungdrucks im Zylinder eines Dieselmotors für eine Stabglühkerze mit einem Kerzenkörper und einem darin so angeordneten Heizstab, dass der am Heizstab liegende Verbrennungsdruck vom Heizstab zur Anschlussseite übertragen wird, **gekennzeichnet durch**
- ein Gehäuse, das auf den anschlussseitigen Teil des Kerzenkörpers der Stabglühkerze aufsetzbar ist,
- elektrische Anschlüsse im Gehäuse, die bei aufgesetztem Stecker den Glühkerzenanschluss des Heizstabes kontaktieren und zur Anschlussseite des Steckers führen, und
- einen Drucksensor, der im Gehäuse des Steckers so angeordnet ist, dass er bei aufgesetztem Stecker **durch** den vom Glühkerzenanschluss des Heizstabes übertragenen Druck beaufschlagt ist.

2. Druckmessstecker nach Anspruch 1, **dadurch gekennzeichnet, dass** die elektrischen Anschlüsse im Gehäuse den Glühkerzenanschluss des Heizstabes seitlich kontaktieren.

3. Druckmessstecker nach Anspruch 2, **dadurch gekennzeichnet, dass** der Drucksensor scheibenförmig ausgebildet ist und im aufgesetzten Zustand des Steckers auf dem Glühkerzenanschluss des Heizstabes unter einer Vorspannung aufliegt.
